# EUROPEAN PATENT APPLICATION

(11) **EP 4 691 703 A1**
(43) Date of publication of application: **11.02.2026**
(21) Application number: 25734523.1
(22) Date of filing: 16.01.2025
(51) Int. Cl.: B25J 9/16

(54) **ROBOT SCHEDULING SYSTEM AND METHOD, AND STORAGE MEDIUM**

(30) Priority: 12.09.2024 CN 202411293745
(71) Applicant: Hangzhou Hikrobot Co., Ltd., Hangzhou, Zhejiang 310051 (CN)
(72) Inventor: CAO, Huanyue, Hangzhou, Zhejiang 310051 (CN); SU, Quan, Hangzhou, Zhejiang 310051 (CN); LI, Biyong, Hangzhou, Zhejiang 310051 (CN)
(74) Representative: Yang, Shu
(86) International application number: PCT/CN2025/072684
(87) International publication number: WO 2025/140735

(57) **Abstract**

A robot scheduling system, which relates to the technical field of logistics, and is used for solving the problem of the logistics efficiency of a warehousing system not being high. The system comprises a scheduling device and a rack (101), wherein the rack (101) corresponds to a plurality of transfer robots (102); the scheduling device is in communication connection with the plurality of transfer robots (102); and the scheduling device is configured to control, upon receiving an order instruction for instructing the transfer of goods in a target rack area, a transfer robot (102) corresponding to the target rack area to operate, the target rack area is one of a plurality of rack areas which are obtained by means of partitioning the rack (101) in the lengthwise direction and/or the depthwise direction of the rack (101) on the basis of attribute information of the rack (101) and/or a placement rule for goods on the rack (101), and one rack area at least corresponds to one transfer robot (102). Further provided are a robot scheduling method and a storage medium.

## Description

The present application claims the priority to a Chinese patent application No. 202411293745.1 filed with the China National Intellectual Property Administration (CNIPA) on September 12, 2024 and entitled "SYSTEM, METHOD FOR ROBOT SCHEDULING AND STORAGE MEDIUM", which is incorporated herein by reference in its entirety.

### Technical Field

The present application relates to the technical field of logistics, and in particular to a system, method for robot scheduling and storage medium.

### Background

With the rise of e-commerce and other emerging industries, in order to build high-efficiency and high-liquidity automated logistics, enterprises often adopt warehousing systems and use robots to realize automatic transferring and storage of goods. The robot transferring solutions in the existing warehousing system include: a carton transfer unit (CTU) transferring solution, a four-way shuttle vehicle transferring solution, and a single sky transfer unit (STU) transferring solution. However, these transferring solutions have certain defects, which will affect the entire logistics efficiency.

### Summary

The present application provides a system and method for robot scheduling, and storage medium for solving the problem of low logistics efficiency of warehousing system.

To achieve the above purposes, the present application adopts the following technical solutions.

In a first aspect, an embodiment in the present application provides a system for robot scheduling, including a scheduling device, a goods shelf and multiple transfer robots corresponding to the goods shelf; the scheduling device is communicatively connected to the multiple transfer robots; the transfer robots each includes a column portal frame, a transfer mechanism and a guide rail; wherein the column portal frame is mounted along a vertical direction of the goods shelf; the transfer mechanism is arranged on the column portal frame for vertically moving on the column portal frame to transfer goods at different heights of the goods shelf; the column portal frame is movably connected to the guide rail, so that the column portal frame and the transfer mechanism move horizontally along the guide rail to transfer goods of the goods shelf in a length direction;
the scheduling device is configured to control a transfer robot corresponding to a target goods shelf area to work upon receiving an order instruction indicating transferring of goods on the target goods shelf area; the target goods shelf area is one of multiple goods shelf areas obtained by dividing the goods shelf along the length direction and/or a depth direction of the goods shelf according to attribute information of the goods shelf and/or placement rules of the goods on the goods shelf; one goods shelf area corresponds to at least one transfer robot.

The technical solution provided by the present application at least brings the following beneficial effects: in the system for robot scheduling adopted in the present application, the goods shelf can be divided into multiple goods shelf areas according to the attribute information of the goods shelfs and/or placement rules of the goods on the goods shelfs, and one goods shelf area corresponds to at least one transfer robot. In this way, the transfer robots can move in their respective goods shelf areas during the transferring operation, ensuring that multiple transfer robots work together on one goods shelf while avoiding conflicts. Therefore, the technical solution of the present application can ensure the concurrency of operation tasks in the warehousing system and improve the logistics efficiency of the warehousing system.

In one possible implementation, the scheduling device is specifically configured to, after receiving the order instruction indicating transferring of goods on the target goods shelf area, determine a position of the goods on the goods shelf; according to the position of the goods on the goods shelf, determine a horizontal moving distance and a vertical moving distance of the transfer robot corresponding to the target goods shelf area; wherein the horizontal moving distance does not exceed a length of the target goods shelf area; and send a moving instruction to the transfer robot corresponding to the target goods shelf area to control the transfer robot corresponding to the target goods shelf area to work; wherein the moving instruction includes the horizontal moving distance and the vertical moving distance.

In one possible implementation, the attribute information is used to characterize a storage capacity of the goods shelf and/or whether the goods shelf contains buffer slots.

In one possible implementation, in response to determining that the attribute information is used to characterize the storage capacity of the goods shelf, the multiple goods shelf areas are obtained by dividing according to a number of the multiple transfer robots based on the storage capacity of the goods shelf.

In one possible implementation, the storage capacity of the goods shelf comprises sizes of a target goods shelf in a length direction, a height direction and a depth direction; storage capacities corresponding to different goods shelf areas are the same, or sizes of different goods shelf areas in the length direction are the same.

In one possible implementation, in response to determining that the attribute information is used to characterize whether the goods shelf contains the buffer slots, the goods shelf is divided into a first goods shelf area containing the buffer slots and a second goods shelf area containing no buffer slot.

In one possible implementation, the attribute information includes heights of various positions at a bottom layer of the goods shelf from a ground; in response to determining that the heights of various positions at the bottom layer of the goods shelf from the ground are greater than or equal to a preset threshold, the goods shelf contains no buffer slot; in response to determining that the heights of various positions at the bottom layer of the goods shelf from the ground are less than the preset threshold, the goods shelf contains buffer slots.

In one possible implementation, the placement rules are used to characterize attribute conditions met by goods in respective areas of the goods shelf, the attribute conditions includes conditions for categories of the goods and/or storage and retrieval frequency of the goods.

In one possible implementation, in response to determining that the attribute conditions include the categories of the goods, the multiple goods shelf areas are obtained by dividing according to the categories of the goods.

In one possible implementation, in response to determining that the attribute conditions comprise the storage and retrieval frequency of the goods, the multiple goods shelf areas are obtained by dividing according to the storage and retrieval frequency of the goods, and one goods shelf area corresponds to one preset numerical interval of the storage and retrieval frequency.

In one possible implementation, the scheduling device is further configured to determine, in response to determining that there is an overlapping area between two adjacent goods shelf areas, that a first transfer robot is responsible for the overlapping area according to at least one of a task completion time priority, a distance priority, and a task priority; the first transfer robot is one of two transfer robots corresponding to the two adjacent goods shelf areas.

In one possible implementation, the scheduling device is further configured to control, in response to determining that a failure of a second transfer robot is detected, a third transfer robot to work in a goods shelf area corresponding to the second transfer robot; a goods shelf area corresponding to the third transfer robot is adjacent to the goods shelf area corresponding to the second transfer robot.

In a second aspect, the present application provides a method for robot scheduling, the method includes: receiving an order instruction; controlling a transfer robot corresponding to a target goods shelf area to work in response to determining that the order instruction indicating transferring of goods on the target goods shelf area; the target goods shelf area is one of multiple goods shelf areas obtained by dividing the goods shelf along a length direction and/or a depth direction of the goods shelf according to attribute information of the goods shelf and/or placement rules of the goods on the goods shelf; one goods shelf area corresponds to at least one transfer robot.

In a third aspect, the present application provides an apparatus for robot scheduling, the apparatus includes: a receiving module, configured to receive an order instruction; a controlling module, configured to control a transfer robot corresponding to a target goods shelf area to work in response to determining that the order instruction indicating transferring of goods on the target goods shelf area; the target goods shelf area is one of multiple goods shelf areas obtained by dividing the goods shelf along a length direction and/or a depth direction of the goods shelf according to attribute information of the goods shelf and/or placement rules of the goods on the goods shelf; one goods shelf area corresponds to at least one transfer robot.

In a fourth aspect, the present application provides a computing device including one or more processors and one or more memories; wherein the one or more memories are configured to store computer program codes, and the computer program codes include computer instructions that, when executed by the one or more processors, cause the computing device to perform any one of method for robot scheduling provided by the above second aspect.

In a fifth aspect, the present application provides a computer-readable storage medium storing computer execution instructions that, when executed on a computer, cause the computer to perform any one of method for robot scheduling provided by the above second aspect.

In a sixth aspect, the present application provides a computer program product including computer instructions that, when executed on a computing device, cause the computing device to perform the method for robot scheduling as described in the second aspect and any possible design thereof.

In a seventh aspect, the present application provides a system for robot scheduling, including a scheduling device, multiple transfer robots corresponding to a goods shelf and a guide rail; the scheduling device is communicatively connected to the multiple transfer robots; the transfer robots each includes a column portal frame and a transfer mechanism; wherein the column portal frame is mounted along a vertical direction; the transfer mechanism is arranged on the column portal frame for vertically moving on the column portal frame to transfer goods at different heights of the goods shelf; the column portal frame is movably connected to the guide rail, so that the column portal frame and the transfer mechanism move horizontally along the guide rail to transfer goods of the goods shelf in a length direction; the scheduling device is configured to control a transfer robot corresponding to a target goods shelf area to work upon receiving an order instruction indicating transferring of goods on the target goods shelf area; the target goods shelf area is one of multiple goods shelf areas obtained by dividing the goods shelf along the length direction and/or a depth direction of the goods shelf according to attribute information of the goods shelf and/or placement rules of the goods on the goods shelf; one goods shelf area corresponds to at least one transfer robot.

The specific descriptions of the second aspect to the seventh aspect and their various implementations in the present application can be referred to the detailed description of the first aspect and its various implementations. Moreover, the beneficial effects of the second aspect to the seventh aspect and their various implementations can be referred to the beneficial effect analysis in the first aspect and its various implementations, and will not be repeated here.

The aspects or other aspects of the present application will be more concise and understandable in the following description.

### Brief Description of the Drawings

Fig. 1 is a schematic composition diagram of a system for robot scheduling provided by an embodiment of the present application;
Fig. 2 is a schematic flow diagram of a method for robot scheduling provided by an embodiment of the present application;
Fig. 3 is a schematic diagram of goods shelf areas provided by an embodiment of the present application;
Fig. 4 is a schematic diagram of Scenario 1 provided by an embodiment of the present application;
Fig. 5 is a schematic diagram of Scenario 2 provided by an embodiment of the present application;
Fig. 6 is a schematic diagram of Scenario 3 provided by an embodiment of the present application;
Fig. 7 is a schematic diagram of Scenario 4 provided by an embodiment of the present application;
Fig. 8 is a schematic diagram of Scenario 5 provided by an embodiment of the present application;
Fig. 9 is a schematic composition diagram of an apparatus for robot scheduling provided by an embodiment of the present application;
Fig. 10 is a schematic composition diagram of a computing device provided by an embodiment of the present application.

### Detailed Description

In the following, technical solutions in embodiments of the present application will be clearly and completely described in combination with the accompanying drawings in the embodiments of the present application. Obviously, the described embodiments are only some, and not all, of the embodiments of the present application. All other embodiments obtained by those skilled in the art based on the embodiments of the present application without creative work fall into the scope of protection of the present application.

It should be noted that in the embodiments of the present application, the words such as "exemplary" or "for example" are used to indicate examples, illustrations or introductions. Any embodiment or designing solution described with "exemplary" or "for example" in the embodiments of the present application shall not be interpreted as being more preferable or superior than other embodiments or designing solutions. Specifically, the use of words such as "exemplary" or "for example" is intended to present the related concept in a specific way. The terms "first" and "second" are used for descriptive purposes only and are not to be understood as indicating or implying relative importance or implicitly indicating the number of indicated technical features. Thus, a feature defined with "first" or "second" may explicitly or implicitly includes one or more such feature. In the description of the present application, "multiple" means two or more unless otherwise illustrated.

In order to facilitate understanding, the basic concepts of some terms or technologies involved in the embodiments of the present application are briefly introduced and explained.

Lurking robot: an automatic guided robot that can carry a turnover box.

Turnover box: also called as a logistics box, carton, which can be used for holding goods, and is designed for easy stacking and management.

CTU robot: a fully automatic unmanned picking and transfer robot, composed of a chassis, a goods shelf layer and a retrieval mechanism, which can realize the transferring of multiple goods at one time, thus improving retrieval efficiency and storage capacity.

Four-way shuttle vehicle: a transfer robot, which is an automatic transferring device that moves freely in four directions (front, back, left and right) within a plane.

STU robot: a rail carton transfer robot, including a column portal frame, a transfer mechanism and a guide rail. The column portal frame is mounted along a vertical direction of the goods shelf; the transfer mechanism is arranged on the column portal frame for vertically moving on the column portal frame to transfer goods at different heights of the goods shelf. The column portal frame is movably connected to the guide rail, so that the column portal frame and the transfer mechanism move horizontally along the guide rail to transfer goods at different positions on the goods shelf in the length direction.

The transfer mechanism can also be called as an executing mechanism. Driving wheels and pulleys can be mounted on the column portal frame, which can also be called as moving mechanisms. The driving wheels can be mounted at the bottom of the column portal frame in contact with the ground to control the speed and direction of the movement of the column portal frame. The pulleys are movably connected to the guide rail and configured to control the moving distance of the column portal frame. The driving wheels drive the column portal frame and the transfer mechanism to move horizontally along the guide rail. The above guide rail can be mounted on one side of the goods shelf.

In addition, from the content described above, the transfer mechanism of the STU robot can move along the column portal frame in the vertical direction, so that the STU robot can transfer goods at different heights of the goods shelf, and the STU robot can move along the guide rail, so that STU robot can transfer goods at different horizontal positions on the goods shelf.

In the aforementioned implementation, the guide is described as a part of the STU, which is only a way of description rather than limitation. In the actual implementation, the guide rail may not be described as a constituent part of the STU robot, but rather exist as an independent component. In order to explain more clearly, an embodiment of the present application also provides a rail carton transfer robot, including a column portal frame and a transfer mechanism. The column portal frame is mounted in the vertical direction; the transfer mechanism is arranged on the column portal frame for vertically moving on the column portal frame to transfer goods at different heights of the goods shelf. The column portal frame is movably connected to the guide rail, so that the column portal frame and the transfer mechanism move horizontally along the guide rail to transfer the goods at different positions on the goods shelf in the length direction.

In other words, the STU robot needs to be mounted with the guide rail in the working scenario, so that the column portal frame of the STU robot can be movably connected to the guide rail mounted in the scenario, and then the STU robot can move along the guide rail to perform tasks at different positions in the scenario.

Elevator: it is an important device for achieving vertical movement, mainly used for cross layer vertical transportation of goods and layer changing of shuttle vehicles.

Buffer slot: a reserved position at the bottom of the goods shelf for temporarily storing turnover boxes. The STU robot can select the goods to be out of the warehouse from the goods shelf and place them in the buffer slot for lurking robots and other robots to transfer the goods out of the warehouse. The lurking robot can also place the in-warehoused goods in the buffer slot for the STU robot to perform on-shelf storage.

The above is an introduction to some of concepts involved in the embodiments of the present application, which will not be repeated below.

At present, the robot transferring solutions in the warehousing system include: CTU transferring solution, four-way shuttle vehicle transferring solution and single STU transferring solution, etc.

The CTU transferring solution: the CTU robot uses the chassis to move in a straight line in the laneway, and then performs in-warehouse and ex-warehouse operations of turnover boxes through the lifting apparatus. Generally, one CTU robot is responsible for one CTU warehouse area (usually one laneway), the CTU robot is allowed to work across warehouse areas.

Four-way shuttle vehicle transferring solution: the four-way shuttle vehicle uses elevators to store or pick up various types of goods in warehouse orders using multi-layer goods shelfs or pallets for in-warehousing storage or ex-warehousing retrieval.

Single STU transferring solution: the STU robot moves left and right on a three-dimensional plane by means of the guide rail, and moves up and down by means of its own lifting mechanism, thereby achieving the retrieval and placement of turnover boxes at designated positions on the goods shelf in the three-dimensional plane. After unloading a box from the shelf (i.e., off-shelf) and placing it in a buffer slot, loading a box from the nearest buffer slot and putting it on the shelf (i.e., on-shelf).

However, all these robot transferring solutions have certain defects: in the CTU transferring solutions, the lifting speed of a CTU robot is slower than that of a STU robot. In addition, the lifting height of a CTU robot is limited. For the operation of storing and retrieving turnover boxes at a high layer, a two-stage portal frame is needed to expand the lifting height, which will affect the efficiency of loading and unloading goods.

In the four-way shuttle vehicle transferring solution, since the four-way shuttle vehicle does not involve the ability to operate at a high layer, an elevator is required to store and retrieve goods at a high layer, which will affect the operation efficiency.

In the single STU robot transferring solution, the operation efficiency of a single device is low, and it is difficult to meet the requirements of high throughput. In addition, as the STU robot relies on the guide rail for operation, if multiple STU robots are arranged to operate at the same time, once the multiple STU robots run on the same guide rail, it will cause conflicts and affect the operation efficiency.

To sum up, all the current robot transferring solutions have certain defects, which will affect the robot operation efficiency, that is, which will affect the logistics efficiency.

In this regard, an embodiment of the present application provides a system for robot scheduling. In the system for robot scheduling adopted in the present application, the goods shelf can be divided into multiple goods shelf areas according to the attribute information of the goods shelf and/or placement rules of the goods on the goods shelf, and one goods shelf area at least corresponds to one transfer robot. In this way, transfer robots can move in front of their corresponding goods shelf areas during transferring operations, ensuring that multiple transfer robots work together on one goods shelf while avoiding conflicts. Therefore, the technical solution provided by the embodiment of the present application can ensure the concurrency of the operation tasks in the warehousing system and improve the logistics efficiency of the warehousing system.

The system for robot scheduling and the method for robot scheduling provided by the embodiments of the present application are illustrated in detail below in combination with specific embodiments.

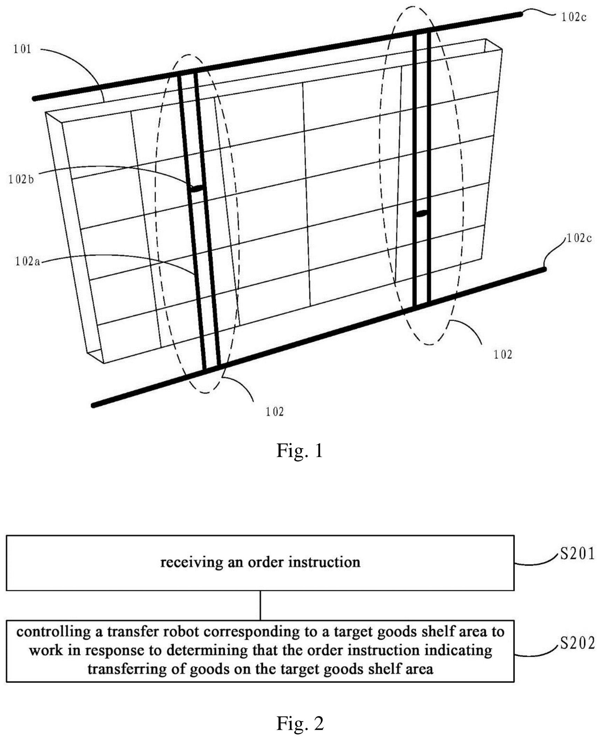

Referring to Fig. 1, Fig. 1 shows the schematic composition diagram of the system for robot scheduling (also known as the warehousing system) provided by an embodiment of the present application. As shown in Fig. 1, the system for robot scheduling includes: a scheduling device (not shown in Fig. 1), a goods shelf 101, and multiple transfer robots 102 corresponding to the goods shelf 101 (the specific number of the transfer robots can be determined according to the specific scenario, and two transfer robots are illustrated in Fig. 1).

The transfer robots 102 in the system for robot scheduling work in a storage space such as a warehouse, the storage space is arranged with the goods shelf 101 as shown in Fig. 1.

The goods shelf 101 can be a fixed goods shelf or a mobile goods shelf. The goods shelf 101 has multiple layers, and each layer has multiple compartments, and each compartment can be used to store a turnover box loaded with goods.

The depth of the goods shelf 101 can be double depth or single depth, which is not limited in the present application.

The transfer robot 102 includes: a column portal frame 102a, a transfer mechanism 102b and a guide rail 102c.

The column portal frame 102a is mounted along a vertical direction of the goods shelf 101. The transfer mechanism 102b is arranged on the column portal frame 102a for vertically moving on the column portal frame 102a to transfer goods at different heights of the goods shelf. The column portal frame 102a is movably connected to the guide rail 102c, so that the column portal frame 102a and the transfer mechanism 102b can move horizontally along the guide rail 102c to transfer goods at different positions on the goods shelf 101 in the length direction.

In one possible implementation, the system for robot scheduling provided by the embodiment of the present application includes: a scheduling device, multiple transfer robots corresponding to the goods shelf (the specific number of the transfer robots can be determined according to the specific scenario) and a guide rail.

The transfer robots in the system for robot scheduling work in a storage space such as a warehouse, the storage space is arranged with a goods shelf.

The goods shelf can be a fixed goods shelf or a mobile goods shelf. The goods shelf has multiple layers, each layer has multiple compartments, and each compartment can be used to store a turnover box loaded with goods.

The depth of the goods shelf can be double depth or single depth, which is not limited in the present application.

The transfer robot includes: a column portal frame and a transfer mechanism.

The column portal frame is mounted along a vertical direction. The transfer mechanism is arranged on the column portal frame for vertically moving on the column portal frame to transfer goods at different heights on the goods shelf. The column portal frame is movably connected to the guide rail, so that the column portal frame and the transfer mechanism can move horizontally along the guide rail to transfer goods at different positions on the goods shelf in the length direction.

In one possible implementation, driving wheels and pulleys can be mounted on the column portal frame 102a. The driving wheels can be mounted at the bottom of the column portal frame 102a in contact with the ground to control the speed and direction of the movement of the column portal frame. The pulleys are movably connected to the guide rail and configured to control the moving distance of the column portal frame. The driving wheels drive the column portal frame 102a and the transfer mechanism 102b to move horizontally along the guide rail.

It should be illustrated that one transfer robot 102 can be connected to at least one guide rail (such as one guide rail or two guide rails). As shown in Fig. 1, both the upper and lower parts of the goods shelf 101 are equipped with guide rails, so that the upper end of the column portal frame of the transfer robot is movably connected to the upper guide rail, and the lower end of the column portal frame 102a of the transfer robot 102 is movably connected to the lower guide rail, thereby ensuring the stability of the column portal frame 102a when it moves horizontally along the guide rails.

In one implementation, one guide rail can be fixedly mounted between two opposite goods shelfs, so that the transfer robot 102 on one guide rail can be responsible for the operation tasks on the two goods shelfs at the same time.

In some embodiments, the guide rail can be fixedly mounted on the goods shelf, or on the ground or ceiling, which is not specifically limited in the embodiments of the present application.

Several examples of installation methods of the guide rail are provided below.

Example 1: the guide rails are directly mounted on the goods shelf. Specifically, an upper guide rail and a lower guide rail are mounted on a side of the goods shelf along the horizontal direction. For example, the guide rails can be mounted on the side of the goods shelf through screws and nuts. The column portal frame of the transfer robot is movably connected to the upper and lower guide rails respectively. In this way, the installation of the guide rails can be more stable.

Example 2: two guide rails are mounted on the goods shelf through a support rod, and the support rod extends outward from the goods shelf for a distance, so that there is a distance between the guide rails and the goods shelf. The upper and lower guide rails are fixed at a distance from the goods shelf through the support rod along the horizontal direction. In this way, the column portal frame connected to the guide rails is also separated from the goods shelf by a distance, which can leave more operation space for the transfer robot to transfer goods from the goods shelf.

Example 3: one lower guide rail is mounted on the ground. The column portal frame of the transfer robot is movably connected to the guide rail mounted on the ground. In this way, the guide rail will not move with the goods shelf, and there is no need to reinstall the guide rail when the goods shelf needs to be replaced.

Example 4: one lower guide rail is mounted on the ground, and one upper guide rail is mounted above the goods shelf through the support rod, as shown in Fig. 1. The lower end of the column portal frame of the transport robot is movably connected to the guide rail mounted on the ground, and the upper end of the column portal frame of the transport robot is movably connected to the guide rail mounted above the goods shelf. In this way, compared with the way of only installing the lower guide rail, the movement of the transfer robot can be more stable.

In some embodiments, multiple transfer robots 102 responsible for the same goods shelf can share one guide rail, or use different guides respectively (In Fig. 1, one shared guide rail is shown as an example). It should be understood that in a case where the multiple transfer robots 102 share one guide rail, a laneway between the goods shelfs can be arranged narrower, so as to effectively reduce a distance between the goods shelfs in the warehousing system, thus improving the storage capacity of the warehousing system. The embodiment of the present application is illustrated by taking the example that the multiple transfer robots responsible for the same goods shelf share one guide rail.

For the convenience of description, transfer robots used in the embodiments of the present application are hereinafter collectively referred to as STU robots.

In addition, the scheduling device included in the system for robot scheduling is configured to control the operation of the entire warehousing system. For example, the scheduling device can be connected to the STU robots in a wired or wireless manner to send instructions to the STU robots to instruct the STU robots to perform goods transferring operations. The scheduling device can be a server or other device with data processing capability and communication capability. The server mentioned here can be a server cluster composed of multiple servers, or a single server, or a computer. The scheduling device can be a processor or processing module in the server. The embodiments of the present application do not limit the specific device form of the above server.

The implementation of the method for robot scheduling provided by an embodiment of the present application will be described in detail below in combination with the accompanying drawing.

The method for robot scheduling provided by the embodiment of the present application can be executed by the scheduling device in the system for robot scheduling.

As shown in Fig. 2, an embodiment of the present application provides a method for robot scheduling, the method includes the following steps:
S201, receiving an order instruction.

The order instruction is used to indicate that a specific item needs to undergo an in-warehoused operation or ex-warehoused operation.

Ex-warehouse can also be called as off-shelf, i.e., removing goods from the goods shelf. For example, the transfer robot transfers the goods on the goods shelf to the lowest buffer slot, and the lurking robot takes out the goods from the buffer slot and transports the goods away. In-warehouse can also be called on-shelf, i.e., transferring goods to the goods shelf. For example, the lurking robot places the goods in the buffer slot of the goods shelf, and the transfer robot transfers the goods in the buffer slot to the goods shelf above the buffer slot.

The above order instruction can include information such as the quantity and type of the goods to be in-warehoused or ex-warehoused.

S202, controlling a transfer robot corresponding to a target goods shelf area to work in response to determining that the order instruction indicating transferring of goods on the target goods shelf area.

The order instruction indicating transferring of goods on the target goods shelf area can include: indicating transferring of goods to the target goods shelf area, or transferring the goods from the target goods shelf area. The work performed by the transfer robot accordingly includes: transferring goods to or from the target goods shelf area, which is described in detail below.

The target goods shelf area is one of multiple goods shelf areas obtained by dividing the goods shelf along the length direction and/or a depth direction of the goods shelf according to the attribute information of the goods shelf and/or placement rules of the goods on the goods shelf; one goods shelf area corresponds to at least one transfer robot. The transfer robot corresponding to one goods shelf area can be understood as the transfer robot responsible for the ex-warehouse or in-warehouse operation of the goods in the goods shelf area.

In addition, one goods shelf area can include multiple storage positions.

The order instruction can indicate to perform the ex-warehouse or in-warehouse operation of the goods.

After receiving the order instruction, if the scheduling device determines that the order instruction indicates that it is needed to perform the ex-warehouse operation for a certain item in the target goods shelf area, that is, to move the certain item in the target goods shelf area out of the goods shelf, the scheduling device can control the transfer robot to perform goods transferring work in the way provided in the following steps a1-a3.

Step a1, determining a storage position and a buffer slot.

First, the scheduling device determines a target goods shelf area where goods indicated in the order instruction are located, a storage position of the goods in the target goods shelf area, and a buffer slot where the goods are to be placed according to the order instruction.

In order to determine the buffer slot, the scheduling device can determine a buffer slot nearest to the storage position of the goods in the target goods shelf area from unoccupied buffer slots as the buffer slot to place the goods.

The order instruction can also include a specified buffer slot. The scheduling device can determine the buffer slot specified in the order instruction as the buffer slot to place the goods.

Step a2, taking out the goods from the storage position.

After determining the storage position of the goods in the target goods shelf area, the scheduling device can control the transfer robot corresponding to the target goods shelf area to move along the guide rail to the front of determined storage position, the and control the transfer mechanism of the transfer robot to move vertically along the column portal frame to the height of the determined storage position, and thus control the transfer mechanism to take out the goods in the storage position.

Step a3, placing the goods in the buffer slot.

After taking out the goods, the scheduling device controls the transfer robot to move along the guide rail to the front of the determined buffer slot, and controls the transfer mechanism of the transfer robot to move vertically along the column portal frame to the height of the determined buffer slot, and thus controls the transfer mechanism to place the goods taken out from the storage position in the buffer slot.

Subsequently, the scheduling device can also control the lurking robot to take out goods from the buffer slot to realize the ex-warehouse of goods.

If the scheduling device determines that the order instruction indicates that it is needed to perform the in-warehouse operation for certain goods in the target goods shelf area, that is, the goods should be stored in the target goods shelf area, the scheduling device can control the transfer robot to perform goods transferring in the way provided in the following steps b1-b3.

Step b1, determining a buffer slot and a storage position.

First, the scheduling device determines a buffer slot where goods indicated in the order instruction are located, a target goods shelf area where the goods are to be placed, and a specific storage position in the target goods shelf area where the goods are to be placed according to the order instruction.

Step b2, taking out the goods from the buffer slot.

After determining the buffer slot where goods are to be placed, the scheduling device can also control the lurking robot to place the goods in the buffer slot firstly. After detecting that the goods are placed in the buffer slot, the scheduling device controls a transfer robot corresponding to the target goods shelf area to move along the guide rail to the front of the determined buffer slot, and controls the transfer mechanism of the transfer robot to move vertically along the column portal frame to the height of the determined buffer slot, and thus controls the transfer mechanism to take out the goods from the buffer slot.

Step b3, placing the goods in the storage position.

After taking out the goods, the scheduling device controls the transfer robot to move along the guide rail to the front of the determined storage position, and controls the transfer mechanism of the transfer robot to move vertically along the column portal frame to the height of the determined storage position, and thus controls the transfer mechanism to place the goods taken from the buffer slot in the storage position.

In a case where the transfer robot needs to perform multiple on-shelf and off-shelf tasks, the tasks can be performed according to the following strategy: after off-shelfing a box of goods and placing it in the buffer slot, on-shelfing a box from the buffer slot nearest to the off-shelf position putting it on the shelf. The transfer robot can also perform multiple on-shelf and off-shelf tasks according to a random strategy.

As mentioned above, due to the limitation of the guide rail in the single STU transferring solution, generally for one goods shelf, a single STU robot is responsible for the operation tasks on this goods shelf. In order to improve the operation efficiency, multiple STU robots can be arranged at the same time to take charge of the operation tasks (transferring tasks) on the goods shelf. In order to avoid conflicts between multiple STU robots running on the same guide rail, the goods shelf can be divided into different goods shelf areas, and the divided goods shelf areas can be assigned with transfer robots respectively, so that each STU robot can perform operation tasks on its own responsible goods shelf area to avoid conflicts.

Before scheduling the transfer robots to transfer goods according to the above method for robot scheduling, it is necessary to allocate transfer robots for different goods shelf areas, which means that the goods shelf need to be divided into goods shelf areas first. In the process of dividing the goods shelf, the goods shelf can be divided according to the attribute information of the goods shelf and/or placement rules of goods on the goods shelf, so as to adapt to multiple scenarios. Please refer to the specific descriptions of scenario 1-scenario 5 below, which will not be described in detail here.

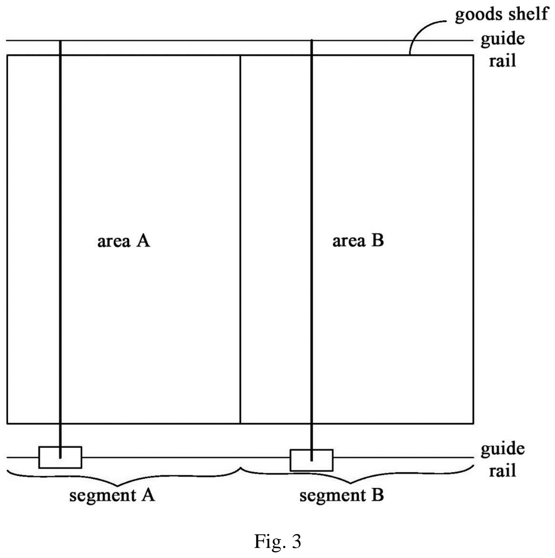

Fig. 3 is a schematic diagram of the goods shelf areas obtained after division provided by an embodiment of the present application. As shown in Fig. 3, which shows two goods shelf areas (area A and area B respectively) that are divided evenly along the length of the goods shelf. The height of each goods shelf area is consistent with the height of the goods shelf, and the length is a part of the goods shelf length.

By using this average division method to obtain the goods shelf areas, the STU robot can move on certain areas of the guide rail to complete the operation tasks on the goods shelf area, without affecting other STU robots. As shown in Fig. 3, STU robot 1 can move in segment A to complete the relevant tasks in the area A, and STU robot 2 can move in segment B to complete the relevant tasks in the area B. As can be seen from Fig. 3, the movable areas of STU robot 1 and STU robot 2 do not overlap, and there will be no cross operation or conflict between the two parties.

In some embodiments, the above S202 can be implemented as follows:
S202a, after receiving the order instruction indicating transferring of goods on the target goods shelf area, determining a position of the goods on the goods shelf.

After receiving the order instruction, the scheduling device can first determine whether to perform ex-warehouse or in-warehouse operation on the goods according to the order instruction. If it is needed to perform an ex-warehouse operation on goods, the scheduling device can determine a target goods shelf area where the goods are located and a storage position of the goods in the target goods shelf area. In addition, the scheduling device can also determine a buffer slot where the goods are to be placed. If it is needed to perform an in-warehouse operation on goods, the scheduling device can determine a buffer slot where the goods are to be placed, a target goods shelf area where the goods are to be placed, and a specific storage position in the target goods shelf area where the goods are to be placed.

S202b, determining a horizontal moving distance and a vertical moving distance of the transfer robot corresponding to the target goods shelf area according to the position of the goods on the goods shelf. The horizontal moving distance does not exceed the length of the target goods shelf area.

The horizontal moving distance is the distance that the column portal frame of the transfer robot drives the transfer mechanism to move along the horizontal direction on the guide rail, and the vertical moving distance is the distance that the transfer mechanism of the transfer robot moves along the column portal frame.

If it is needed to perform an ex-warehouse operation on the goods, the scheduling device can first determine a distance in the horizontal direction between a current position of the transfer robot and the storage position of the goods in the target goods shelf area, as a first horizontal moving distance; and determine a height difference between a current height of the transfer mechanism of the transfer robot and a height of the storage position of the goods in the target goods shelf area as a first vertical moving distance.

After the transfer robot takes out the goods from the storage position, the scheduling device can also determine a distance in the horizontal direction between the position of the transfer robot after taking out the goods from the storage position and the buffer slot of the goods to be placed as a second horizontal moving distance; and determine a height difference between a height of the transfer mechanism of the transfer robot after taking out the goods from the storage position and a height of the buffer slot of the goods to be placed, as a second vertical moving distance.

If it is needed to perform an in-warehouse operation on the goods, the scheduling device can first determine a distance in the horizontal direction between the current position of the transfer robot and a buffer slot where the goods are to be placed, as a third horizontal moving distance; and determine a height difference between the current height of the transfer mechanism of the transfer robot and a height of the buffer slot where the goods are to be placed as a third vertical moving distance.

After the transfer robot takes out the goods from the buffer slot, the scheduling device can also determine a distance in the horizontal direction between the position of the transfer robot after taking out the goods from the buffer slot and a storage position of the goods to be placed, as a fourth horizontal moving distance; and determine a height difference between a height of the transfer mechanism of the transfer robot after taking out the goods from the buffer slot and the height of the storage position of the goods to be placed, as a fourth vertical moving distance.

S202c, sending a moving instruction to the transfer robot corresponding to the target goods shelf area to control the transfer robot corresponding to the target goods shelf area to work. The moving instruction includes the horizontal moving distance and the vertical moving distance.

The moving instruction can directly include the horizontal moving distance and the vertical moving distance, instructing the transfer robot to move according to the above two distances. The moving instruction can also include a horizontal moving sub instruction and a vertical moving sub instruction. The horizontal moving sub instruction is an instruction that instructs the transfer robot to move the horizontal moving distance along the horizontal direction. The vertical moving sub instruction is an instruction that instructs the transfer mechanism to move the vertical moving distance along the column portal frame.

After determining the horizontal moving distance and vertical moving distance of the transfer robot in the above step S202b, the scheduling device can send a moving instruction containing the above horizontal moving distance and vertical moving distance to the transfer robot, and control the driving wheels of the transfer robot to drive the column portal frame and the transfer mechanism to move the horizontal moving distance along the horizontal direction, and control the transfer mechanism of the transfer robot to move the vertical moving distance along the column portal frame.

For example, when it is needed to perform an ex-warehouse operation on the goods, the scheduling device can control the driving wheels of the transfer robot to drive the column portal frame and the transfer mechanism to move the first horizontal distance along the horizontal direction, move to the front of storage position of the goods in the target goods shelf area, and control the transfer mechanism of the transfer robot to move the first vertical distance along the column portal frame, move to the height of the storage position of the goods in the target goods shelf area, and then take out the goods from the storage position. The movement of the column portal frame of the above transfer robot along the horizontal direction and the movement of the transfer mechanism of the transfer robot along the column portal frame can be performed simultaneously or successively, which is not limited.

After taking out the goods, the scheduling device can control the driving wheels of the transfer robot to drive the column portal frame and the transfer mechanism to move the second horizontal moving distance along the horizontal direction to the front of the buffer slot of the goods to be placed, and control the transfer mechanism of the transfer robot to move the second vertical moving distance along the column portal frame to the height of the buffer slot of the goods to be placed, so as to place the goods taken out from the storage position. Here, the movement of the column portal frame of the transfer robot along the horizontal direction and the movement of transfer mechanism of the transfer robot along the column portal frame can be also performed simultaneously or successively, which is not limited.

In the above transferring process, the driving wheels of the transfer robot drive the column portal frame and the transfer mechanism to move along the horizontal direction while the transfer mechanism moves vertically along the column portal frame, which can improve the transferring efficiency.

It can be seen that in the technical solution provided by the embodiment of the present application, after the scheduling device in the system for robot scheduling receives the order instruction, the scheduling device first determines a goods shelf area to which the goods indicated in the order belong, and then determines a STU robot corresponding to the goods shelf area according to the corresponding relationship between pre-configured goods shelf areas and STU robots, then determines the horizontal moving distance and vertical moving distance according to the current position of the STU robot and the position of the goods shelf, and then sends the moving instruction containing the moving distance information to the STU robot in a wired or wireless mode, so as to control the STU robot to move based on the horizontal and vertical sizes, realizing the transferring in-warehouse or picking ex-warehouse of the goods.

It should be understood that since the horizontal moving distance of the STU robot does not exceed the length of its corresponding goods shelf area, it can ensure that the STU robot moves within a limited range, avoiding the problem of cross conflict when multiple STU robots move.

It should be illustrated that the above S202a-S202c is only a specific implementation of S202, and S202 can also be implemented in other ways. For example, the scheduling device first configures the responsible goods shelf area for each STU robot. After receiving the order instruction, the scheduling device determines the position of the goods, and then sends the position of the goods to each STU robot respectively. Each STU robot determines whether the position of the goods is within its responsible goods shelf area. If the position of the goods is within its responsible goods shelf area, the STU robot will perform the transferring task according to the position of the goods. If the position of the goods is not within its responsible goods shelf area, the STU robot will not perform any actions. It should be understood that the implementation of S202 includes but is not limited to the above two implementations, and other feasible implementations can also be adopted, which will not be repeated here.

The division method of goods shelf areas is described in detail below in combination with specific embodiments and the accompanying drawings of the description.

In some embodiments, during the division process, the scheduling device can divide the goods shelf along the length direction and/or depth direction of the goods shelf to obtain multiple goods shelf areas according to the attribute information of the goods shelf and/or placement rules of the goods on the goods shelf.

In one possible implementation, attribute information is used to characterize a storage capacity of the goods shelf and/or whether the goods shelf contains buffer slots.

The storage capacity mentioned here can be characterized by the information such as sizes of the target goods shelf in the length direction, height direction and depth direction; the storage capacities corresponding to different goods shelf areas can be the same, or sizes of different goods shelf areas in the length direction can be the same.

That is to say, when obtaining multiple goods shelf areas by division, the goods shelf can be divided according to the same storage capacity corresponding to different goods shelf areas, or the goods shelf can be divided according to the same length size of different goods shelf areas.

In one possible way, whether the goods shelf contains buffer slots can be determined based on heights of various positions at the bottom layer of the goods shelf from the ground. In response to determining that the heights of various positions at the bottom layer of the goods shelf from the ground are greater than or equal to a preset threshold, it indicates that the goods shelf contains no buffer slot. In response to determining that the heights of various positions at the bottom layer of the goods shelf from the ground are less than the preset threshold, it indicates that the goods shelf contains buffer slots. There are no specific limitations.

In one possible implementation, the placement rules represent the attribute conditions met by the goods in the respective areas of the goods shelf, the attribute conditions include conditions for categories of the goods and/or storage and retrieval frequency of the goods. For example, the above attribute conditions can include: the categories of the goods being the same, the storage and retrieval frequency of goods being in a preset numerical interval, etc.

In the present application, a certain type of goods and its associated products, or main and auxiliary products, can be called a class of goods, that is, belong to one category of goods. Such as alcoholic beverages, aromatic products, etc. The storage and retrieval frequency of goods can reflect, for example, the quantity of goods shipped out or stored in within a unit of time. The storage and retrieval frequency of goods can reflect whether the goods are hot selling products.

It should be understood that the database of the scheduling device stores the relevant information about a goods shelf and goods, and records the relevant information of goods flow (ex-warehouse /in-warehouse) at all times. Therefore, the scheduling device can obtain this information from the database to reasonably divide the goods shelf into goods shelf areas based on this information to adapt to multiple types of operation scenarios. See Scenario 1-Scenario 5 below for details.

In other words, the scheduling device can obtain the relevant information of goods from the database to determine the category of goods; the scheduling device can obtain the relevant information of a goods shelf and goods from the database, as well as the recorded information about the flow of goods, to determine the storage and retrieval frequency of goods. Then the scheduling device divides the goods shelf into goods shelf areas based on the determined category of the goods and the storage and retrieval frequency of the goods.

The following Scenario 1 and Scenario 2 are the methods of dividing a goods shelf into multiple goods shelf areas according to the attribute information of the goods shelf.

### Scenario 1

In the case where the attribute information is used to characterize the storage capacity of a goods shelf, the goods shelf is divided into multiple goods shelf areas according to the number of transfer robots based on the storage capacity of the goods shelf.

The storage capacity of a target goods shelf can be characterized by sizes of the target goods shelf in the length direction, height direction and depth direction. Storage capacities corresponding to different goods shelf areas are the same, or sizes of different goods shelf areas in the length direction are the same.

Specifically, when dividing the goods shelf in Scenario 1, the goods shelf can be divided into the same number of goods shelf areas as that of the transfer robots. The storage capacities of these multiple goods shelf areas are the same, or sizes of these multiple goods shelf areas in the length direction are the same.

As an example, if two STU robots are pre-configured to be responsible for the goods shelf, taking different goods shelf areas with the same size in the length direction as an example, the target goods shelf can be divided into two goods shelf areas with equal length (equal within a certain error range), and the storage capacities of the two goods shelf areas obtained by this division are close.

That is to say, when obtaining multiple goods shelf areas by division, if the goods shelf is divided into different goods shelf areas with the same size in the length direction, the storage capacities of the divided goods shelf areas will also be close.

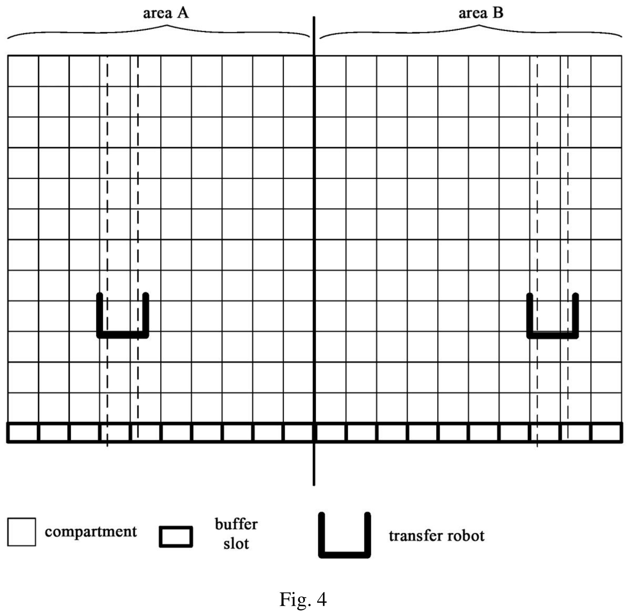

For example, Fig. 4 is a schematic diagram of a scenario 1 provided by the embodiment of the present application. As shown in Fig. 4, taking the pre-configured two STU robots to be responsible for the goods shelf as an example, the goods shelf is divided into two goods shelf areas on average. The two goods shelf areas have the same size in the length direction. These two goods shelf areas are area A and area B respectively. Between the pre-configured two STU robots, one STU robot is responsible for the operation tasks in the area A, and the other STU robot is responsible for the operation tasks in the area B. The area A and the area B have the same size in the length direction, and the storage capacities of the goods shelf areas in the area A and the area B will be close.

When there is an in-warehouse task, the lurking robot transports the goods to a buffer slot (indicated by the bolded box at the bottom layer in Fig. 4), and then the STU robot responsible for the goods shelf area where the buffer slot is located will transfer the goods in the buffer slot to the shelf for on-shelf storage. When there is an ex-warehouse task, the STU robot responsible for the goods shelf area where the goods to be ex-warehoused are located will transport the goods on the goods shelf to the lowest buffer slot, and then the lurking robot takes out the goods from the buffer slot for ex-warehouse.

It should be understood that Scenario 1 can be adapted to the situation where the operation tasks are evenly distributed on the goods shelf. Each STU robot is responsible for the operation task of the equivalent range of the goods shelf, which can avoid repetitive labor and prevent multiple STU robots from interfering with each other. In addition, it can avoid the overload of a single STU robot and ensure load balancing. Moreover, planning the movement range of the STU robot in a fixed area can improve the familiarity of the STU robot with the goods shelf and improve the accuracy of performing tasks.

### Scenario 2

In a case where the attribute information is used to characterize whether the goods shelf contains buffer slots, the goods shelf is divided into a first goods shelf area containing the buffer slots and a second goods shelf area containing no buffer slot.

The buffer slots of the goods shelf are located at the bottom along the height direction. The buffer slots in the goods shelf and areas directly above the buffer slots are taken as a portion containing the buffer slots, which is called as the first goods shelf area, and other areas containing no buffer slot can be called as the second goods shelf area. That is to say, the boundary between the first goods shelf area and the second goods shelf area is a straight line along the height direction.

It should be understood that for a goods shelf containing no buffer slot, the heights of various positions at the bottom layer of the goods shelf from the ground are greater than or equal to a preset threshold, which allows lurking robots and other devices to traverse horizontally under the goods shelf without being blocked by the goods shelf. In this way, the lurking robots do not need to bypass the goods shelf when transferring goods, thus improving the transferring efficiency.

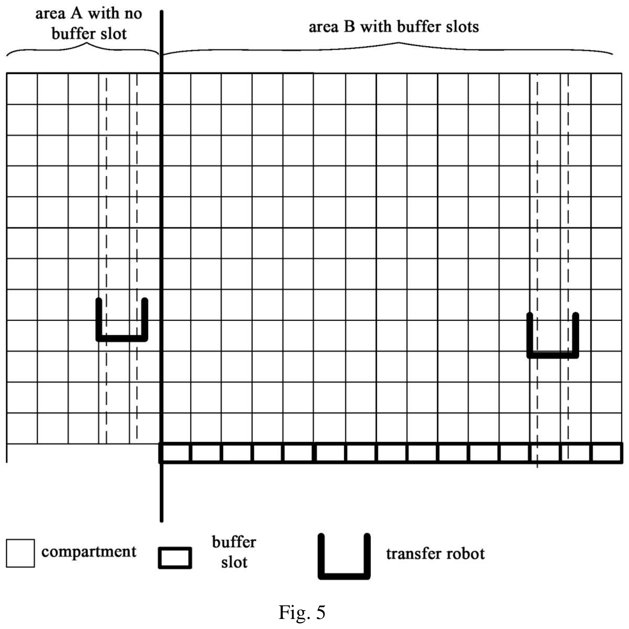

For example, Fig. 5 is a schematic diagram of Scenario 2 provided by the embodiment of the present application. As shown in Fig. 5, there is no buffer slot at the bottom of area A of the goods shelf (that is, the heights of various positions at the bottom layer of the goods shelf from the ground are greater than or equal to the preset threshold), area A of the goods shelf can be separately divided into a first goods shelf area. There are buffer slots at the bottom of area B of the goods shelf (that is, the heights of various positions at the bottom layer in the goods shelf from the ground are less than the preset threshold), the area B of the goods shelf can be divided into a second goods shelf area. The STU robots assigned to area A and responsible for the operation tasks in area A can be called STU robots without buffer slots. When performing a transferring task, a STU robot without buffer slot will transfer the goods in area A to area B. The rest of the STU robots assigned to area B can normally perform operation tasks in area B. For example, they can transfer goods to the buffer slots when performing ex-warehouse tasks, or transfer goods from the buffer slots to the shelf for on-shelf when performing in-warehouse tasks.

By dividing the work area (that is, the goods shelf areas), so that multiple STU robots assigned to multiple goods shelf areas can work separately, which can effectively improve the operation efficiency. In addition, due to the current warehousing system environment, buffer slots are arranged at the bottom of the goods shelf. When the lurking robot transfers the goods, the lurking robot needs to bypass the goods shelf to achieve lateral passage due to the blocking of the buffer slots, which has a long detour path and affects the transferring efficiency of the goods. However, in the embodiment of the present application, there is no buffer slot at the bottom of area A, so the lurking robot can smoothly traverse horizontally below the area A without detours, thereby improving the transferring efficiency of goods.

It should be understood that Scenario 2 is adapted to scenarios with a large number of warehouses and many tasks. By dividing the portion without buffer slot as a goods shelf area, the lurking robot can directly navigate under the portion without buffer slot when transferring goods in the whole logistics process, so as to avoid detours and improve logistics efficiency.

The following Scenario 3 and Scenario 4 are the methods of dividing the goods shelf into multiple goods shelf areas according to the placement rules of goods on the goods shelf.

### Scenario 3

The placement rules of goods on the goods shelf can be the attribute conditions met by the goods in the respective areas of the goods shelf. The attribute conditions can include the conditions for the categories of the goods. In the above cases, multiple goods shelf areas can be divided according to the categories of goods. That is, the embodiment of the present application can divide the goods shelf into goods shelf areas according to the principle that goods of the same category (or similar) are placed in the same goods shelf area.

In some scenarios, goods on the goods shelf are stored according to the categories of the goods, and goods of the same category (or similar categories) are stored in the same row of goods shelfs or adjacent goods shelfs. Therefore, the goods shelf areas can be divided according to the categories of the goods, that is, one goods shelf area corresponds to a class of goods or multiple similar categories of goods.

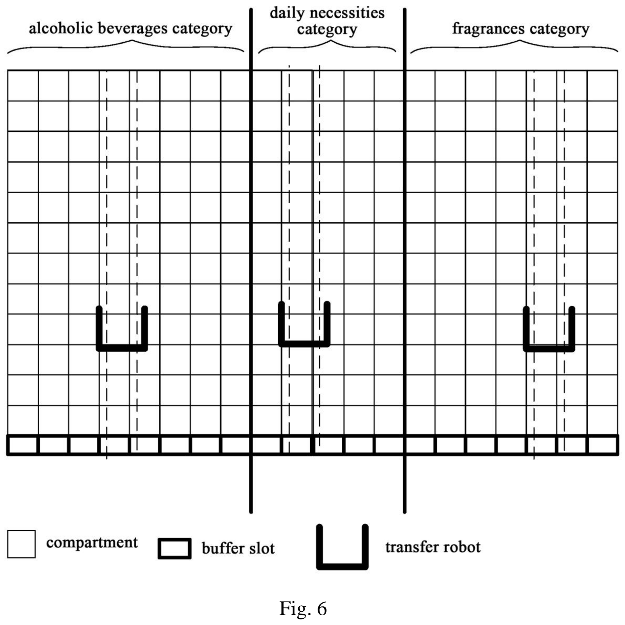

The embodiment of the present application takes the division of an area where a class of goods is located as a goods shelf area as an example, for example, Fig. 6 is a schematic diagram of scenario 3 provided by the embodiment of the present application. As shown in Fig. 6, there are three categories of goods stored on the goods shelf, namely alcoholic beverages category, daily necessities category, and fragrances category. Therefore, the goods shelf is divided into three goods shelf areas according to the above three categories (the length of goods shelf areas can be the same or different, as shown in Fig. 6 with different lengths as an example), and each STU robot corresponds to one goods shelf area.

It should be understood that one order may correspond to the purchase of a large number of goods of the same category (or similar categories). The division method in Scenario 3 can enable one STU robot to complete the delivery task of one order, which can reduce the scheduling complexity of simultaneously scheduling multiple STU robots to complete the order.

### Scenario 4

The placement rules of goods on the goods shelf can be the attribute conditions met by the goods in the respective areas of the goods shelf. The attribute conditions of goods can also be set based on the storage and retrieval frequency of goods. In the above cases, multiple goods shelf areas can be obtained by dividing according to the storage and retrieval frequency of goods. For example, one goods shelf area corresponds to a preset numerical interval of the storage and retrieval frequency. That is, the present application can divide the goods shelf into goods shelf areas according to the principle of placing goods with similar storage and retrieval frequency in the same goods shelf area.

In some scenarios, goods with high popularity may be placed in the same goods shelf area, and goods with low popularity may be placed in the same goods shelf area. The scheduling device of the warehousing system will record the historical storage and retrieval frequency of each type of goods on the goods shelf, so the goods shelf can be divided into goods shelf areas according to the storage and retrieval frequency of goods.

In other words, goods with high popularity (i.e., hot selling commodities with high storage and retrieval frequency) can be placed in the same goods shelf area; goods with low popularity, (i.e., non-hot selling commodities with low storage and retrieval frequency) can also be placed in the same goods shelf area. The scheduling device can record the historical storage and retrieval frequency of each type of goods on the goods shelf, and divide an area where goods with historical storage and retrieval frequency in the same preset numerical interval as one goods shelf area according to the historical storage and retrieval frequency of each type of goods and the preset numerical interval of the storage and retrieval frequency.

For example, taking a first storage and retrieval frequency threshold as a segmentation, an area with the storage and retrieval frequency greater than or equal to the first storage and retrieval frequency threshold is divided as one goods shelf area, and an area with the storage and retrieval frequency less than the first storage and retrieval frequency threshold is divided as another goods shelf area. As another example, taking a the second storage and retrieval frequency threshold and a third storage and retrieval frequency threshold as a segmentation (the second storage and retrieval frequency threshold is greater than the third storage and retrieval frequency threshold), an area with the storage and retrieval frequency greater than or equal to the second storage and retrieval frequency threshold is divided as goods shelf area 1, an area with the storage and retrieval frequency less than the second storage and retrieval frequency threshold and greater than or equal to the third storage and retrieval frequency threshold is divided as goods shelf area 2, and an area with the storage and retrieval frequency less than the third storage and retrieval frequency threshold is divided as goods shelf area 3.

That is to say, in one example, taking the first storage and retrieval frequency threshold as the segmentation, and two preset numerical intervals are obtained, including a numerical interval greater than or equal to the first storage and retrieval frequency threshold, and a numerical interval less than the first storage and retrieval frequency threshold. According to the above two preset numerical intervals, the goods shelf is divided into the following two goods shelf areas: an area where goods with storage and retrieval frequency greater than or equal to the first storage and retrieval frequency threshold are located, and an area where goods with storage and retrieval frequency less than the first storage and retrieval frequency threshold are located.

In another example, taking the second storage and retrieval frequency threshold and the third storage and retrieval frequency threshold as the segmentation (the second storage and retrieval frequency threshold is greater than the third storage and retrieval frequency threshold), and three preset numerical intervals are obtained, including: a numerical interval with the storage and retrieval frequency greater than or equal to the second storage and retrieval frequency threshold, a numerical interval with the storage and retrieval frequency less than the second storage and retrieval frequency threshold and greater than or equal to the third storage and retrieval frequency threshold, and a numerical interval with the storage and retrieval frequency less than the third storage and retrieval frequency threshold. According to the above three preset numerical intervals, the goods shelf is divided into three goods shelf areas as follows: goods shelf area 1 where the goods with storage and retrieval frequency greater than or equal to the second storage and retrieval frequency threshold are located, goods shelf area 2 where the goods with storage and retrieval frequency less than the second storage and retrieval frequency threshold and greater than or equal to the third storage and retrieval frequency threshold are located, and goods shelf area 3 where the goods with storage and retrieval frequency less than the third storage and retrieval frequency threshold are located.

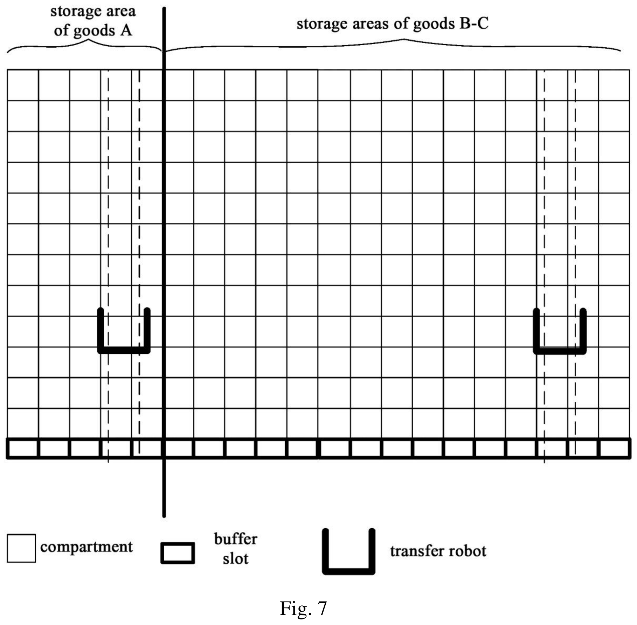

For example, Fig. 7 is a schematic diagram of Scenario 4 provided by the embodiment of the present application. As shown in Fig. 7, the goods are stored in areas based on high popularity and low popularity. Because of the large demand and popularity of goods A, and there are high requirements for the speed and efficiency of in-warehouse and ex-warehouse. Therefore, a portion for storing goods A is divided as one goods shelf area, and the STU robots are specifically assigned to be responsible for the operation tasks of goods A, so as to ensure that the STU robots move within a limited range, achieve rapid response, and reduce the waiting time for goods transferring.

The following scenario 5 is a division method that can include overlapping areas.

### Scenario 5

When obtaining goods shelf areas by dividing, there may be an overlapping area between two adjacent goods shelf areas.

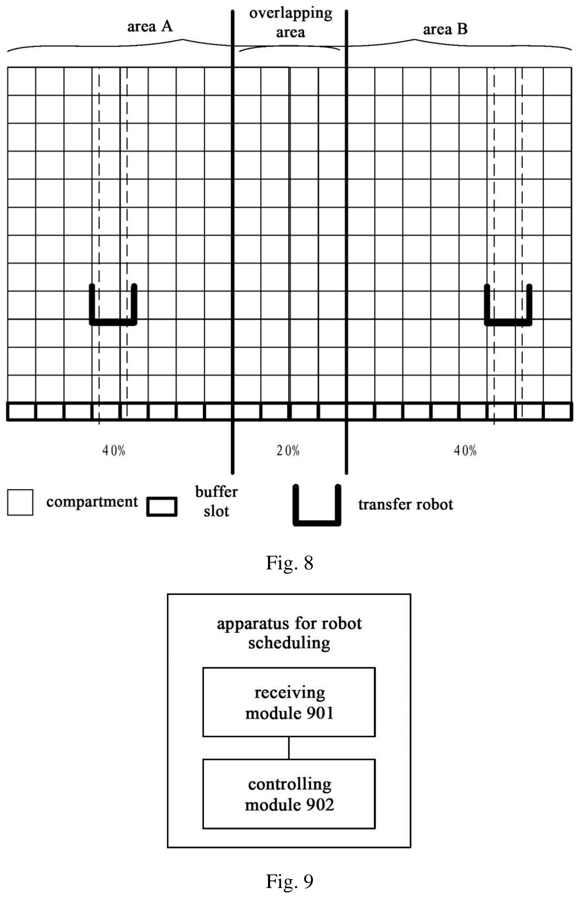

In one case, the goods shelf areas can be divided in combination with the sizes of the goods shelf areas in the length direction. The divided goods shelf areas have the same size, and the adjacent goods shelf areas have an overlapping area. For example, as shown in Fig. 8, one goods shelf can be divided into two goods shelf areas, area A and area B, as shown in Fig. 8. The size of each of the two goods shelf areas in the length direction is 60% of the length of the entire goods shelf, and the middle 20% is the overlapping area of area A and area B.

In another case, the goods shelf areas can also be divided in combination with the categories of goods, and there is an overlapping area between the divided adjacent goods shelf areas. For example, on the basis of the goods placement form shown in Fig. 6, the rightmost one column of the area where goods of daily necessities category are located and the area where goods of fragrances category are located are divided as a goods shelf area of fragrances category. The leftmost two columns of the area where goods of fragrances category are located and the area where goods of daily necessities category are located are divided as a goods shelf area of daily necessities category. The rightmost one column of the area where goods of daily necessities category are located and the leftmost two columns of the area where goods of fragrances category are located are the overlapping area of the goods shelf area of daily necessities category and the goods shelf area of fragrances category, which can be used to place goods belonging to both daily necessities category and fragrances category.

After the goods shelf areas are divided according to the division method of scenarios 1-4, since there is no overlapping area between different goods shelf areas, when assigning transfer robots to the respective goods shelf areas, fixed transfer robots can be randomly assigned to each goods shelf area. When receiving a transferring task for the respective goods shelf area subsequently, the scheduling device can schedule the transfer robots corresponding to the goods shelf area to perform the transferring task.

After the goods shelf areas are divided according to the division method in Scenario 5, since there is an overlapping area between different goods shelf areas, after assigning a transfer robot to the respective goods shelf area, two transfer robots are responsible for the overlapping area. If it is needed to schedule the transfer robot to perform the transferring tasks in the overlapping area, it is needed to consider the conflict between the two transfer robots when performing the transferring task in the overlapping area. In this case, the scheduling device can determine a first transfer robot responsible for the overlapping area according to the task completion time priority and/or distance priority. The first transfer robot is one of the two transfer robots corresponding to the adjacent two goods shelf areas.

That is to say, there may be an overlapping part in the goods shelf areas for which the adjacent STU robots are responsible in this scenario. In this case, it is necessary to adjust the scheduling method of the STU robots for the overlapping part to avoid conflicts caused by two STU robots working simultaneously in the overlapping part. When receiving the transferring task in the overlapping area, the scheduling device determines a first transfer robot from the two STU robots according to the task completion time priority, distance priority, and task priority, and schedules the first transfer robot to perform the transferring task in the overlapping area, thus avoiding conflicts between the two STU robots working in the overlapping area at the same time.

For example, Fig. 8 is a schematic diagram of Scenario 5 provided by the embodiment of the present application. As shown in Fig. 8, taking the existence of two STU robots as an example, the goods shelf is divided into two goods shelf areas, namely area A and area B, accounting for 60% respectively. The area A and the area B have an overlapping area (e.g., 20%). 40% of area A is the default goods shelf area of STU robot 1, and 40% of area B is the default goods shelf area of STU robot 2.

Since the two STU robots are jointly responsible for the overlapping area, in order to avoid conflicts, in a case where there is a task in the overlapping area, if STU robot 1 completes its current task earlier, for example, if STU robot 1 completes its current task earlier than that of STU robot 2, then the task will be assigned to STU robot 1. Alternatively, if the current position of STU robot 1 is close to the overlapping area, for example, the distance between the current position of STU robot 1 and the overlapping area is less than the distance between the current position of the STU robot 2 and the overlapping area, the operation task will be assigned to STU robot 1. Alternatively, any two factors of task completion time priority, distance priority, and task priority can also be comprehensively considered to assign tasks. For example, by combining the two factors of task completion time priority and distance priority, a weighted sum of the two factors is used to determine the weight result, and then the task assignment is performed according to the weight result. For example, the weights for the task completion time and distance are set respectively. For STU robot 1, the weights corresponding to the current task completion time, the distance between the current position and the overlapping area, the task completion time and the distance of STU robot 1 respectively are used for performing the weighted summation to obtain the weighted result 1 corresponding to STU robot 1. Similarly, the weighted result 2 corresponding to STU robot 2 is obtained, and then the value of the weighted result 1 is compared with that of the weighted result 2. If the weighted result 1 is less than the weighted result 2, the task is assigned to STU robot 1, otherwise, the task is assigned to STU robot 2.

In addition, the three factors of task completion time priority, distance priority, and task priority can also be comprehensively considered for task assignment, which will not be repeated. Referring to the above method of task assignment based on the two factors, and then weights of the above three factors are added and summed.

It should be understood that Scenario 5 can avoid the situation where one STU robot moves to a distant position for work, and there will be no situation where two STU robots work on one side at the same time, nor will there be a situation where one STU robot is working obstructing the other STU robot's work. Moreover, Scenario 5 can achieve the use of fewer STU robots to simultaneously manage a large number of goods shelf areas, reducing the investment cost of STU robots.

It should be illustrated that for the overlapping area, the STU robot is assigned according to at least one of the task completion time priority, distance priority and task priority, so the overlapping area may correspond to different STU robots in different time periods. However, at any time, the overlapping area at least corresponds to one STU robot.

That is to say, in a case where the scheduling device receives a transferring task in the overlapping area, the scheduling device can schedule one of the two STU robots responsible for the overlapping area to complete the transferring task of the overlapping area according to at least one of the task completion time priority, distance priority and task priority of the two STU robots. In this way, the overlap area corresponds to the STU robot scheduled by the scheduling device during the time period of executing the transportation task.

In some embodiments, the scheduling device is also configured to control, in response to determining that a failure of a second transfer robot is detected, a third transfer robot to work in a goods shelf area corresponding to the second transfer robot; a goods shelf area corresponding to the third transfer robot is adjacent to the goods shelf area corresponding to the second transfer robot.

For example, in Fig. 4, if the STU robot in the area A fails, the STU robot in the area B can be responsible for the operation task of the failed robot, that is, the STU robot in the area B is now responsible for the task of the entire goods shelf. For another example, in Fig. 6, if a STU robot corresponding to the area of daily necessities category fails, the STU robots corresponding to areas of alcoholic beverages category and fragrances category can be randomly selected to be responsible for the operation task in the area of daily necessities category. Alternatively, based on the workload of the two STU robots, the STU robot with less workload can be selected to be responsible for a new operation task.

It should be understood that through the above-mentioned failure detection related operation strategies, it can be ensured that even if one STU robot fails, other STU robots can still operate normally, ensuring the continuity of the overall operation process and reducing the impact of STU robot failures on the logistics efficiency of the entire warehousing system.

It should be illustrated that in the failure scenario, if one STU robot fails, another STU robot is responsible for the goods shelf area corresponding to the failed robot. In this case, two adjacent goods shelf areas will correspond to the same STU robot (that is, one STU robot is responsible for two goods shelf areas at the same time), which still meets the description of each goods shelf area at least corresponding to one STU robot.

It should be illustrated that in some scenarios, the job strategies of the above scenarios can be used in combination. For example, in Scenario 4, the goods shelf area (goods storage area A) is divided according to the storage and retrieval frequency of the goods. Because there are many tasks, one STU robot is difficult to meet the efficiency requirement. Then, in combination with Scenario 1, the goods storage area A can be evenly divided into two sub areas, and two STU robots can be separately set to work at the same time to further improve the efficiency. For another example, three goods shelf areas divided according to the categories of the goods in Scenario 3 can be combined with the operation strategy in Scenario 5 to set the area of daily necessities category as an overlapping area. In this way, setting up two STU robots can achieve the operation tasks of three goods shelf areas, reducing the investment cost of STU robots while ensuring the operation efficiency.

It should be understood that the above scenarios are only some example descriptions, and any changes and combinations made on the basis of the situations described in the above examples should be covered in the protection scope of the present application.

After the goods shelf areas are divided according to the above method and the transfer robot is assigned to the respective goods shelf area, the scheduling device can determine a target goods shelf area where the goods are located after receiving the order instruction and control the transfer robot corresponding to the target goods shelf area to perform the goods transferring work related to the order instruction according to the method shown in Fig. 2.

The technical solution shown in Fig. 2 at least brings the following beneficial effects: in the system for robot scheduling adopted in the present application, the goods shelf can be divided into multiple goods shelf areas according to the attribute information of the goods shelf and/or placement rules of the goods on the goods shelf, and one goods shelf area corresponds to at least one transfer robot. In this way, the transfer robots can move within their respective goods shelf areas during the transferring operation, ensuring that multiple transfer robots work together on one goods shelf while avoiding conflicts. Therefore, the technical solution of the present application can ensure the concurrency of the tasks in the warehousing system and improve the logistics efficiency of the warehousing system.

The embodiment of the present application adopts STU robots, which can achieve vertical movement of turnover boxes without the need for additional lifting mechanisms, reducing investment costs while improving the transferring efficiency. In addition, the volume of STU robot is smaller than that of CTU and four-way shuttle, which can reduce the spacing between goods shelfs in the warehousing system and increase the area of planar storage capacity area. Moreover, the STU robot is not limited by the height of the goods shelf, and its three-dimensional storage capacity increases, which can store more turnover boxes and improve the goods capacity of the warehousing system.

In addition, the STU robots works on the fixed goods shelf without transferring pallets and goods shelfs, and selects the nearest warehouse position for container transfer without occupying its own storage space, which greatly shortens the time for container transfer.

The present application has a wide range of application scenarios, and different operation strategies can be formulated for different scenarios, so as to meet the requirements of in-warehouse and ex-warehouse operations under multiple conditions.

The above mainly introduces the solutions provided by the embodiments of the present application from the perspective of method. In order to realize the above functions, it includes the corresponding hardware structure and/or software module to perform each function. The technical objectives in this field should be easily recognized, and the present application can be implemented in the form of hardware or a combination of hardware and computer software, based on the units and algorithm steps described in the embodiments disclosed herein. Whether a function is performed in the way of hardware or computer software driving hardware depends on the specific application and design constraints of the technical solution. The professional technical objectives can use different methods for each specific application to realize the described functions, but such implementation should not be considered beyond the scope of the present application.

As shown in Fig. 9, an embodiment of the present application also provides an apparatus for robot scheduling for the method for robot scheduling shown in the above method embodiment. The apparatus for robot scheduling includes:
a receiving module 901, configured to receive an order instruction;
a controlling module 902, configured to control a transfer robot corresponding to a target goods shelf area to work in response to determining that the order instruction indicating transferring of goods on the target goods shelf area; the target goods shelf area is one of multiple goods shelf areas obtained by dividing the goods shelf along a length direction and/or a depth direction of the goods shelf according to the attribute information of the goods shelf and/or placement rules of goods on the goods shelf; one goods shelf area corresponds to at least one transfer robot.

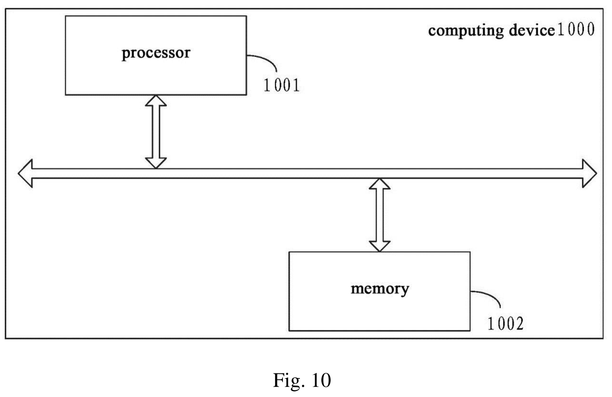

Another embodiment of the present application also provides a computing device. As shown in Fig. 10, the computing device 1000 includes a memory 1002 and a processor 1001; the memory 1002 is coupled with the processor 1001; the memory 1002 is configured to store computer program codes, which include computer instructions that, when executed by the processor 1001, cause the computing device 1000 to perform the various steps executed by the computing device in the method flow shown in the above method embodiment.

In actual implementation, the receiving module 901 and the controlling module 902 can be implemented by the processor 1001 shown in Fig. 10 calling the computer program codes in the memory 1002. The specific execution process can refer to the description of the above method for robot scheduling, which will not be repeated here.

Another embodiment of the present application further provides a computer-readable storage medium, the computer-readable storage medium stores computer execution instructions that, when executed on a computing device, cause the computing device to perform various steps executed by the computing device in the method flow shown in the above method embodiment.

Another embodiment of the present application further provides a computer program product, the computer program product comprises computer instructions that, when executed on a computing device, cause the computing device to perform various steps executed by the computing device in the method flow shown in the above method embodiment.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any available medium that can be accessed by a computer or a data storage device such as a server and a data center and the like that includes an integration of one or more available medium. The available medium may be magnetic media (such as a floppy disk, a hard disk, a magnetic tape), optical media (such as DVD) and the like.

The above description is only the specific implementation of the present application. Those skilled in the art can think of variants or replacements according to the specific implementation provided by the present application, which should be covered in the protection scope of the present application.

## Claims

1. A system for robot scheduling, wherein the system comprises a scheduling device, a goods shelf and multiple transfer robots corresponding to the goods shelf; the scheduling device is communicatively connected to the multiple transfer robots;
the transfer robots each comprises a column portal frame, a transfer mechanism and a guide rail;
wherein the column portal frame is mounted along a vertical direction of the goods shelf; the transfer mechanism is arranged on the column portal frame for vertically moving on the column portal frame to transfer goods at different heights of the goods shelf; the column portal frame is movably connected to the guide rail, so that the column portal frame and the transfer mechanism move horizontally along the guide rail to transfer goods of the goods shelf in a length direction;
the scheduling device is configured to control a transfer robot corresponding to a target goods shelf area to work upon receiving an order instruction indicating transferring of goods on the target goods shelf area; the target goods shelf area is one of multiple goods shelf areas obtained by dividing the goods shelf along the length direction and/or a depth direction of the goods shelf according to attribute information of the goods shelf and/or placement rules of goods on the goods shelf; one goods shelf area corresponds to at least one transfer robot.

2. A system for robot scheduling, wherein the system comprises a scheduling device, multiple transfer robots corresponding to a goods shelf, and a guide rail; the scheduling device is communicatively connected to the multiple transfer robots;
the transfer robots each comprises a column portal frame and a transfer mechanism;
wherein the column portal frame is mounted along a vertical direction; the transfer mechanism is arranged on the column portal frame for vertically moving on the column portal frame to transfer goods at different heights of the goods shelf; the column portal frame is movably connected to the guide rail, so that the column portal frame and the transfer mechanism move horizontally along the guide rail to transfer goods of the goods shelf in a length direction;
the scheduling device is configured to control a transfer robot corresponding to a target goods shelf area to work upon receiving an order instruction indicating transferring of goods on the target goods shelf area; the target goods shelf area is one of multiple goods shelf areas obtained by dividing the goods shelf along the length direction and/or a depth direction of the goods shelf according to attribute information of the goods shelf and/or placement rules of goods on the goods shelf; one goods shelf area corresponds to at least one transfer robot.

3. The system according to claim 1 or 2, wherein the scheduling device is specifically configured to,
after receiving the order instruction indicating transferring of goods on the target goods shelf area, determine a position of the goods on the goods shelf;
according to the position of the goods on the goods shelf, determine a horizontal moving distance and a vertical moving distance of the transfer robot corresponding to the target goods shelf area; wherein the horizontal moving distance does not exceed a length of the target goods shelf area; and
send a moving instruction to the transfer robot corresponding to the target goods shelf area to control the transfer robot corresponding to the target goods shelf area to work; wherein the moving instruction comprises the horizontal moving distance and the vertical moving distance.

4. The system according to any one of claims 1-3, wherein the attribute information is used to characterize a storage capacity of the goods shelf and/or whether the goods shelf contains buffer slots.

5. The system according to claim 4, wherein, in response to determining that the attribute information is used to characterize the storage capacity of the goods shelf, the multiple goods shelf areas are obtained by dividing according to a number of the multiple transfer robots based on the storage capacity of the goods shelf.

6. The system according to claim 5, wherein the storage capacity of the goods shelf comprises sizes of a target goods shelf in a length direction, a height direction and a depth direction; storage capacities corresponding to different goods shelf areas are the same, or sizes of different goods shelf areas in the length direction are the same.

7. The system according to claim 4, wherein, in response to determining that the attribute information is used to characterize whether the goods shelf contains the buffer slots, the goods shelf is divided into a first goods shelf area containing the buffer slots and a second goods shelf area containing no buffer slot.

8. The system according to claim 7, wherein the attribute information comprises heights of various positions at a bottom layer of the goods shelf from a ground;
in response to determining that the heights of various positions at the bottom layer of the goods shelf from the ground are greater than or equal to a preset threshold, the goods shelf contains no buffer slot;
in response to determining that the heights of various positions at the bottom layer of the goods shelf from the ground are less than the preset threshold, the goods shelf contains buffer slots.

9. The system according to any one of claims 1-3, wherein the placement rules are used to characterize attribute conditions met by goods in respective areas of the goods shelf, the attribute conditions comprise conditions for categories of the goods and/or storage and retrieval frequency of the goods.

10. The system according to claim 9, wherein, in response to determining that the attribute conditions comprise the categories of the goods, the multiple goods shelf areas are obtained by dividing according to the categories of the goods.

11. The system according to claim 9, wherein, in response to determining that the attribute conditions comprise the storage and retrieval frequency of the goods, the multiple goods shelf areas are obtained by dividing according to the storage and retrieval frequency of the goods, and one goods shelf area corresponds to one preset numerical interval of the storage and retrieval frequency.

12. The system according to any one of claims 1-3, wherein, the scheduling device is further configured to determine, in response to determining that there is an overlapping area between two adjacent goods shelf areas, that a first transfer robot is responsible for the overlapping area according to at least one of a task completion time priority, a distance priority, and a task priority; the first transfer robot is one of two transfer robots corresponding to the two adjacent goods shelf areas.

13. The system according to any one of claims 1-3, wherein, the scheduling device is further configured to control, in response to determining that a failure of a second transfer robot is detected, a third transfer robot to work in a goods shelf area corresponding to the second transfer robot; a goods shelf area corresponding to the third transfer robot is adjacent to the goods shelf area corresponding to the second transfer robot.

14. A method for robot scheduling, wherein the method comprises:
receiving an order instruction;
controlling a transfer robot corresponding to a target goods shelf area to work in response to determining that the order instruction indicating transferring of goods on the target goods shelf area; the target goods shelf area is one of multiple goods shelf areas obtained by dividing the goods shelf along a length direction and/or a depth direction of the goods shelf according to attribute information of the goods shelf and/or placement rules of goods on the goods shelf; one goods shelf area corresponds to at least one transfer robot.

15. An apparatus for robot scheduling, wherein the apparatus comprises:
a receiving module, configured to receive an order instruction;
a controlling module, configured to control a transfer robot corresponding to a target goods shelf area to work in response to determining that the order instruction indicating transferring of goods on the target goods shelf area; the target goods shelf area is one of multiple goods shelf areas obtained by dividing the goods shelf along a length direction and/or a depth direction of the goods shelf according to attribute information of the goods shelf and/or placement rules of goods on the goods shelf; one goods shelf area corresponds to at least one transfer robot.

16. A computing device, wherein the computing device comprises one or more processors and one or more memories;
wherein the one or more memories are configured to store computer program codes, and the computer program codes comprise computer instructions that, when executed by the one or more processors, cause the computing device to perform the method for robot scheduling of claim 14.

17. A computer-readable storage medium, wherein the computer-readable storage medium stores computer execution instructions that, when executed on a computer, cause the computer to perform the method for robot scheduling of claim 14.

18. A computer program product, wherein the computer program product comprises computer instructions that, when executed on a computing device, cause the computing device to perform the method for robot scheduling of claim 14.
